# EUROPEAN PATENT SPECIFICATION

(11) **EP 3 783 925 B1**
(45) Date of publication and mention of the grant of the patent: **03.01.2024**
(21) Application number: 19382722.7
(22) Date of filing: 22.08.2019
(51) Int. Cl.: H04W 4/021, H04W 4/33, H04L 43/08, H04L 43/0864, G06F 18/2413, G06N 3/045, G06N 3/084, H04L 41/12, H04L 41/16

(54) **DETERMINATION OF INDOOR/OUTDOOR IN MOBILE NETWORKS USING DEEP LEARNING**
BESTIMMUNG VON INNEN/AUSSEN IN MOBILEN NETZWERKEN MITTELS TIEFENLERNEN
DÉTERMINATION D'INTÉRIEUR/EXTÉRIEUR DANS DES RÉSEAUX MOBILES À L'AIDE D'APPRENTISSAGE PROFOND

(43) Date of publication of application: 24.02.2021
(73) Proprietor: Zhilabs S.L., 08029 Barcelona (ES)
(72) Inventor: Arpirez Vega, Julio, Madrid (ES); Zapater Cano, Sergi, Barcelona (ES); López Cebrián, Alberto, Madrid (ES); Rubio Vidales, José María, Madrid (ES); Raventós Simón, Joan, Barcelona (ES)
(74) Representative: Grünecker Patent- und Rechtsanwälte PartG mbB

(56) References cited:
- US-A1- 2014 236 476
- US-B1- 9 967 703
- BEJARANO-LUQUE JUAN L ET AL: "A Data-Driven Algorithm for Indoor/Outdoor Detection Based on Connection Traces in a LTE Network", IEEE ACCESS, vol. 7, 3 June 2019 (2019-06-03), pages 65877-65888, XP011727628, DOI: 10.1109/ACCESS.2019.2917592 [retrieved on 2019-05-31]

## Description

The present disclosure relates to a method and a respective apparatus to determine whether a user equipment such as a mobile device is indoor or outdoor. More particularly, the present disclosure relates to the use of supervised machine learning to determine and/or use a classifier for indoor/outdoor determination.

Widespread presence of wireless data networks allows user equipment access services provided by the internet in many locations. For location based services, a determination of whether the user equipment is indoor or outdoor often is necessary to ensure satisfactory quality of service.

According to the state of the art, measurements provided by a radio access network are employed to determine whether the user equipment is currently indoor. This determination relies on the different propagation properties of the radio signal indoor as compared to outdoor caused, for example, by the presence of walls. However, in practice, measurements relying on metrics of the radio access network do not allow an indoor/outdoor determination with sufficient accuracy.

It is therefore desirable to provide an apparatus and a method to overcome the above disadvantages.

US 9 967 703 B1 discloses a location engine that estimates a wireless terminal as being indoors or outdoors by using information that includes metadata from packet level transmissions of wireless terminals. The metadata are employed to determine one or more classification features. The location engine can then classify a wireless terminal during a communication transaction with respect to the terminal being indoors or outdoors

BEJARANO-LUQUE, JUAN L ET AL: "A Data-Driven Algorithm for Indoor/Outdoor Detection Based on Connection Traces in a LTE Network", IEEE ACCESS, vol. 7, pages 65877-65888, is a research paper describing a data-driven algorithm for indoor/outdoor detection in an LTE network. The described model is based on logistic regression on data from radio connection traces stored in the network management system

US 2014/236476 A1 discloses a method for determining a mobile device location, the method including receiving signals from a transmitter, measuring signal characteristics of the received signals and downloading data from a database corresponding to a defined region associated with the transmitters. The method further includes comparing measured signal characteristics with the expected signal characteristics for each position point as derived from the downloaded data and determining the mobile device location by selecting a position point based on assigning weights to position points

### SUMMARY

It is the object of the present invention to provide an improved method and system for determining whether a user equipment is indoors or outdoors.

This object is solved by the subject matter of the independent claims. Embodiments are defined by the dependent claims.

According to claim 1, a method for obtaining a trained classifier for determining whether a user equipment connected to a mobile network is indoor or outdoor is provided. The mobile network comprises a radio access network and a core network, the radio access network providing wireless connection to the user equipment to connect the user equipment to the core network. The method described in this disclosure employs measurements related to the radio access network and, additionally, measurements related to the core network and geolocated map imagery as inputs to a pipeline of Deep Neural Networks that is trained as an indoor/outdoor classifier.

The method comprises obtaining a training set, wherein each element of the training set comprises a map tile, a set of features from radio access network metrics associated with a location within the map tile, a second set of features from core network metrics associated with the location, and a truth value whether the location is indoor or outdoor. The method then comprises training a classifier, for example, a pipeline of neural networks, using the training set. The method may further include verifying the accuracy of the trained classifier.

According to claim 2, a method for determining whether a user equipment connected to a mobile network is located indoor or outdoor is provided. The method comprises determining a first set of features from current metrics of a radio access network of the mobile network, determining a second set of features from current metrics of a core network of the mobile network, determining a map tile for a location of the user equipment, and employing the first and the second set of features and the map tile as inputs to a classifier to determine whether the user equipment is indoor or outdoor. According to an aspect, the classifier has been trained according to the method of the previous embodiment.

According to a further aspect, determining the map tile for the current location of the user equipment according to one of the previous embodiments comprises communicating with the radio access network to obtain measurements, for example measurements of signal strength, to determine the location of the user equipment by executing a geolocation algorithm. Employing the determined location, a map tile associated with the location can be identified from a map imagery set.

The classifier comprises multiple neural networks. The classifier may also comprise one or more convolutional neural networks and combination logic between the multiple neural networks and the one or more convolutional networks.

The first set of features is fed to a first neural network of the multiple neural networks to determine a first probability, the second set of features is fed to a second neural network of the multiple neural networks to determine a second probability, and the identified map tile is classified by a convolutional neural network. The first probability, the second probability, and the classification of the map tile is fed in a further neural network to produce the determination of whether the user equipment is indoor or outdoor.

According to a further embodiment, the combination logic is configured to perform feature processing between the multiple neural networks and the one or more convolutional neural networks. According to a further aspect, the combination logic may comprise data augmentation logic performed over the map tile.

According to a further aspect, the first set of features may comprise at least one of a feature indicating call drops and their causes, a feature indicating a cell quality index, a feature indicating a call setup success rate, a feature indicating failed handovers and their causes, a feature indicating timing advance and propagation delay, a feature indicating reference signal received quality, a feature indicating reference signal received power, a feature indicating channel state information reference signal received quality, a feature indicating channel state information reference signal received power, a feature indicating secondary signal reference signal received quality, a feature indicating secondary signal reference signal received power, and a feature indicating best reference signal code power. The second set of features may comprise features indicating a client-side TCP round trip time, a server-side TCP round trip time, a TCP retransmission rate, or a TCP window size.

According to claim 9, a computing system is provided, the computing system comprising a processor configured to receive a first set of features relating to current metrics of a radio access network for a user equipment, and a second set of features relating to current metrics of the core network for the user equipment. The processor is further configured to determine a map tile for a location of the user equipment, to input the first set of features, the second set of features, and the map tile to the trained classifier to determine whether the user equipment is indoor or outdoor.

According to aspects of the present invention, the classifier may be trained according to any of the methods described above. Further, the classifier may comprise multiple neural networks, convolutional neural networks and combination logic between the multiple neural networks and the convolutional neural networks.

### BRIEF DESCRIPTION OF THE DRAWINGS

Embodiments of the present invention are shown in the enclosed drawings in which
Figure 1 is a schematic drawing of a system for training and employing a classifier for determining whether a user equipment is indoor or outdoor;
Figure 2 shows a flow diagram for a method of training a classifier for determining whether a user equipment is located indoor or outdoor;
Figure 3 shows a flow diagram of a method of employing a trained classifier for determining whether a user equipment is located indoor or outdoor;
Figure 4 shows a block diagram of a computing device configured for employing a trained classifier for determining whether a user equipment is located indoor or outdoor.

### DETAILED DESCRIPTION

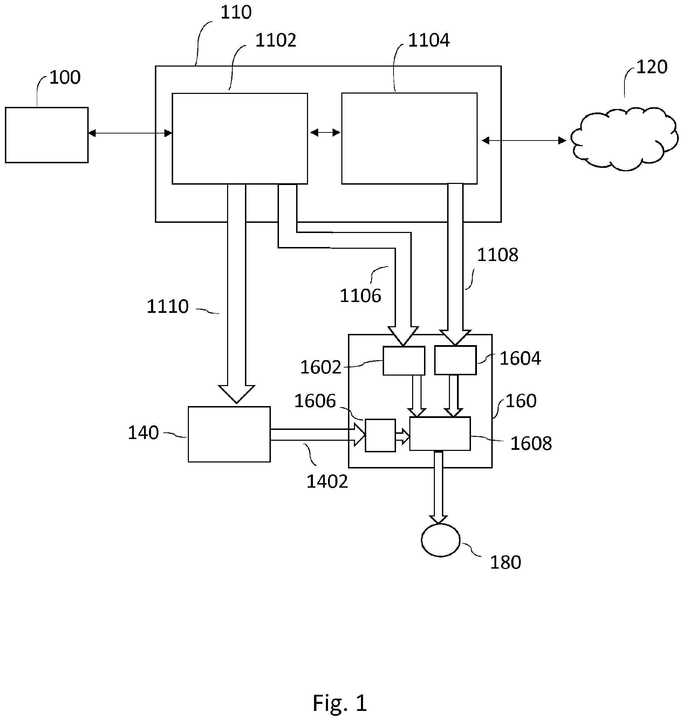

A method for obtaining a trained classifier for determining whether a user equipment is indoor or outdoor, a method for applying the trained classifier for determining whether a user equipment is indoor or outdoor, and a computing device including a processor configured to load and apply the trained classifier to determine whether a user equipment is located indoor or outdoor will be described in detail in the following. For purposes of explanation, examples and specific details are set forth in order to provide a thorough understanding of the embodiments of the present invention. Embodiments, as defined by the claims, may include some or all of the features in these examples alone or in combination with the other features described below, and may further include modifications and equivalents of the features and concepts described herein. The following description will refer to Figures 1 to 4, explaining embodiments of the present invention in detail.

In supervised machine learning, a learning algorithm analyzes training data that consist of pairs of input and known output to infer a function mapping input to output. In case the output is discrete, the inferred function is called a classifier. The trained classifier can then be applied to novel input to infer unknown output according to the learned classification. A particular example of a learning algorithm is training of artificial neural networks. Each artificial neural network consists of a collection of connected units or nodes called artificial neurons, which are organized as layers. Signals travel from a first layer, the input layer, to the last layer, the output layer, possibly after traversing several further layers. Each connection between artificial neurons can transmit a weighted signal from one artificial neuron to another. Weights of the artificial neurons and of the connections are adjusted as learning proceeds. The activation of artificial neurons in the output layer correspond to the values of the learned function, for example, for determining a classification.

Figure 1 shows a block diagram of components and acts for training and applying a classifier 160 for determining whether a user equipment 100 is located indoor or outdoor. A user equipment 100, for example a smartphone, a notebook, or a stationary computing device, may be connected to a mobile network 110. Mobile network 110 comprises radio access network 1102 and core network 1104. Radio access network 1102 provides wireless connection of the user equipment 100 to the core network 1104. Core network 1104 is part of the telecommunications network that provides the backbone to connect the radio access network 1102 to data network 120. Data network 120 may refer to any data network like the internet or another mobile network. Radio access network 1102 may comprise radio base stations that allow connection with user equipments in a local spatial cell. Radio access network 1102 may be a GSM radio access network (GRAN), an enhanced data service for GSM Evolution (EDGE) radio access network (GERAN), a Universal Mobile Telecommunications System (UMTS) radio access network (UTRAN), a radio access network for a Long Term Evolution (LTE) or LTE Advanced network (E-UTRAN), or a 5G RAN.

Core network 1104 provides a hierarchy of a distribution network, an edge network and, on the highest level, a service provider network. Core network 1104 may comprise support nodes, such as LTE nodes like Mobility Management Entiry (MME), Serving Gateway (SGW) or Packet Gateway (PGW) that handle packet switched data (or their equivalents for other accesses, like 5G), as well as mobile switching centers for circuit switched telecommunication. Core network 1104 may provide connection to a data network such as the internet and handle protocol conversion from a network protocol used in the data network and a sub-network protocol for communication from the core network 1104 to the user equipment 100.

Classifier 160 may be provided with a first set of features 1106 and a second set of features 1108 relevant for determining whether the user equipment 100 is indoor or outdoor. Classifier 160 may be stored in a memory of a computing device 400 that is associated with the mobile network 110, receives the first set of features 1106 and the second set of features 1108, loads the classifier from storage, applies the classifier employing the first set of features 1106, the second set of features 1108, and a map tile, and provides the classification to other nodes of the network..

The metrics included in the first set of features 1106 may be selected to best allow inference on whether the user equipment is indoor or outdoor. Connection between the user equipment 100 and base stations of the radio access network 1102 is hampered in indoor environments so that features measuring signal quality allow inferring that the user equipment is located indoor. The first set of features 1106 may comprise a Cell Quality Index (CQI), information on call drops and causes, metrics related to accessibility such as a call setup success rate (CSSR), or information on failed handovers between base stations and causes. The first set of features 1106 may also include features related to timing advance or propagation delay that relate to the signal propagation time between the user equipment and the adjacent base station of the radio access network.

In more detail, when mobile network 110 is a 3G network, the first set of features 1106 may relate to received signal code power (RSCP) which denotes the power received by the user equipment on a particular physical communication channel. The first set of features 1106 may also relate to an active RSCP and total received energy divided by the power density in a band (Ec/No), or best RSCP and Ec/No, or RSCP versus Ec/No. When the mobile network 110 is a 4G network, the first set of features 1106 may relate to reference signal received power (RSRP) versus reference signal received quality (RSRQ). In a 4G mobile network the first set of features 1106 may be based on active RSRP and RSRQ or best RSRP and RSRQ. When the mobile network is 5G network, the first set of features 1106 may be based on channel state information (CSI) and secondary signal (SS). The first set of features 1106 may thus be based on a CSI-RSRP and a CSI-RSRQ, or a SS-RSRP and a SS-RSRQ, or may generally be based on a comparison of RSRP and RSRQ. In a 5G mobile network, the first set of features 1106 may also consider conditions in frequency range 1 and frequency range 2.

According to embodiments of the present invention, core network 1104 may provide the second set 1108 of features to the classifier 160. The second set of features 1108 may be selected to allow a further inference on whether the user equipment is located indoor or outdoor, independent of the metrics included in the first set of features 1106. The second set of features 1108 may comprise metrics of the core network, such as a TCP round trip time (TCP-RTT), for example TCP-RTT measured at the client side, or TCP-RTT measured at a server side. Additionally, or alternatively, the second 1108 set of features may include statistics on TCP retransmissions or TCP window size. These features of TCP are direct measures for the quality and throughput of the connection to the core network and therefore provide independent additional signatures of indoor or outdoor environments.

In embodiments of the present invention, radio access network 1102 may further provide data 1110 that allow a geolocation algorithm 140 to be used to determine the coordinates of the user equipment by a geolocation algorithm. Data 1110 may typically related to measurements delivered from the user equipment to the radio access network. Geolocation algorithm 140 may, for example, employ trilateration requiring signals from three base stations of the radio access network, or triangulation based on estimation of the direction of arrival of signals from two base stations. Geolocation algorithm 140 may also be based on cell ID, received signal strength, a multipath fingerprint, time of arrival, time difference of arrival, or absolute time difference of arrival.

The determined geolocation may then be employed to identify a map tile 1402 for the current geolocation from a map imagery set such that the map tile 1402 covers the determined location of the user equipment. The map imagery set may comprise square map images tiles whose size is determined by the maximum accuracy of the geolocation algorithm.

The first set of features 1106, the second set of features 1108 and the map tile 1402 are inputted to the classifier 160 which produces classification 180 of whether the mobile device is predicted to be indoor or outdoor. In embodiments, classification 180 has a binary value. In other embodiments, classification 180 may have more than two values to additionally distinguishing between different indoor environments such as rooms with or without windows to the outside.

In embodiments, the classifier comprises a pipeline of multiple artificial neural networks. The first set of features 1106 is inputted to a first neural network 1602 of the multiple artificial neural networks and the second set of features 1108 is inputted to a second neural network 1604 of the multiple artificial neural networks. The first neural network 1602 may produce a first probability and the second neural network 1604 may produce a second probability. The map tile for the determined geolocation of the user equipment is fed to a further neural network 1606 of the multiple artificial neural networks. The further neural network is a convolutional neural network. Neural network 1606 may produce a classification of the map tile. Neural network 1606 is a convolutional neural network.

In embodiments, the first probability, the second probability, and the classification of the map tile produced by neural network 1606 are fed to yet another artificial neural network 1608 that produces classification 180 of whether the user equipment is located indoor or outdoor. During training 204 of the classifier, node weights of the multiple artificial neural networks and of the convolutional neural networks are adjusted to minimize prediction error.

Because geographical features visible on the map tile, such as the presence of buildings or of geographical landmarks, influence network conditions of the radio access network and connection to the core network, the first set of features 1106 as well as the second set of features 1108 from the core network are correlated with the classification of the map tile by neural network 1606. Therefore, combining the classification of the map tile with the analysis of the first set of features 1106 and the second set of features 1108 allows a precise prediction of whether the user equipment is located indoor or outdoor.

Classifier 160 may further include combination logic to perform feature processing in between the artificial neural networks. Feature processing may include normalizing feature vectors, rescaling feature vectors or combining feature vectors. Classifier 160 may as well comprise data augmentation logic to be applied to the map tile 1402 such as augmentation logic to perform horizontal or vertical flipping, rotation, scaling, translation of the map tile, noise addition, or a perspective transformation.

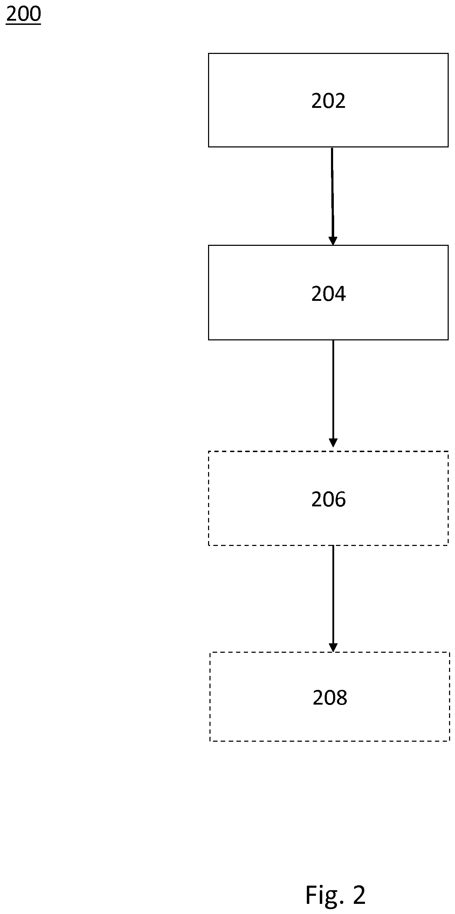

Figure 2 shows a block diagram for a method for obtaining a trained classifier such as for training classifier 160 of Figure 1. The method includes obtaining 202 a training set, the training set including a collection of training data elements, each element training data element comprising a first and a second set of features and a map tile, as explained with reference to Figure 1, as well as a truth value of whether the data relate to a location indoor or outdoor. The training set may be obtained via a user equipment capturing the first and the second set of features and a corresponding map tile, and manually classifying the location of the user equipment as indoor or outdoor. Alternatively, the training set may be obtained via an independent automatic classification performed employing the user equipment.

Method 200 comprises training 204 the classifier using the training set. Training the classifier using the training set may comprise backpropagation of the prediction error to adjust node weights of the neural networks. The prediction error may be as quantified by a cost function. In an embodiment, classifier 160 comprises multiple artificial neural networks processing the first 1106 and the second set of features 1108, and a convolutional network for classifying the map tile 1402. In an example, neural network 1606 may be a convolutional network comprising 5 layers and 32 features, employ max pooling with a pool size of 2 x 2 and have 64 fully connected nodes. The convolutional network may further comprise ReLU activation functions and, at a last layer of the convolutional neural network, a softmax activation function. Backpropagation of errors may be performed employing Adam's Optimizer with specific learning and decay rates.

Method 200 may optionally further comprise validating 206 the trained classifier employing a validation set that provides an unbiased evaluation of the accuracy of the classifier. Validation may include tuning hyperparameters of the classifier and repeating the training. Method 200 may optionally further comprise testing 208 the classifier employing a test set to assess the performance of the trained classifier for achieving a predetermined level of classification accuracy. The validation set and the test set may be obtained in the same manner as the training set.

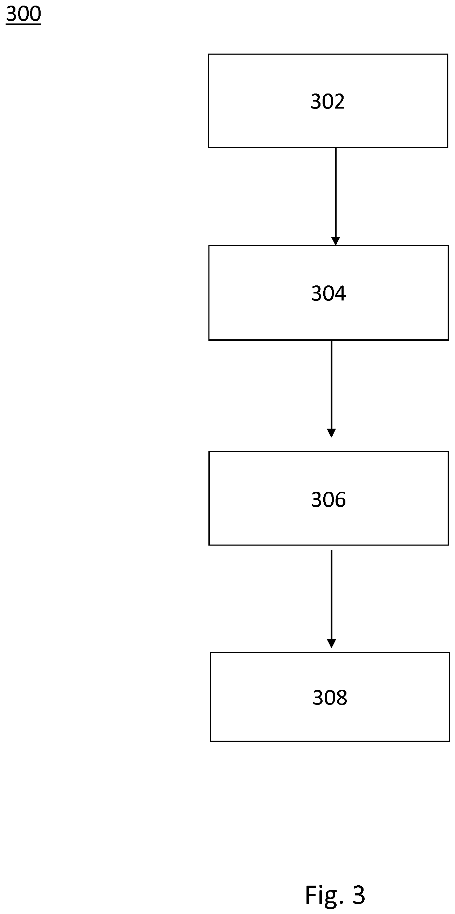

Figure 3 displays a flow chart of a method 300 for applying a trained classifier for determining whether a user equipment is indoor or outdoor. Method 300 may employ the features explained with reference to Figure 1. Method 300 comprises determining 302 a first set of features from current metrics of a radio access network which is part of a mobile network. Determining 302 the first set of features may include receiving the first set of features at a user equipment 100 which is configured to apply the trained classifier. The step of determining 302 the first set of features, may comprise determining the set of features 1106 as discussed with reference to Figure 1.

Method 300 further comprises determining 304 a second set of features from current metrics of the core network. The core network, to which the user equipment is connected by the radio access network, may provide a set of features, as discussed with reference to reference sign 1108 in Figure 1 as the second set of features, to the user equipment.

Method 300 further comprises determining 306 a map tile for a location of the user equipment. In embodiments, determining the map tile may comprise obtaining measurements, for example relating to received signal strength, angle of arrival, time of arrival, time difference of arrival, or received signal phase, from the radio access network. Typically, these measurements have been delivered from the user equipment to the radio access network. The measurements allow a determination of the location of the user equipment by performing a geolocation algorithm, for example employing triangulation or trilateration. Having determined the location of the user equipment, the map tile containing a map or satellite imagery of the surroundings of the determined location can be identified from a map imagery set.

Method 300 further comprises employing the first and the second set of features and the map tile as inputs to a trained classifier to determine 308 whether the user equipment is indoor or outdoor.

The trained classifier has been trained according to method 200 as explained above. The trained classifier comprises multiple artificial neural networks, as explained with reference to reference sign 160 of Figure 1.

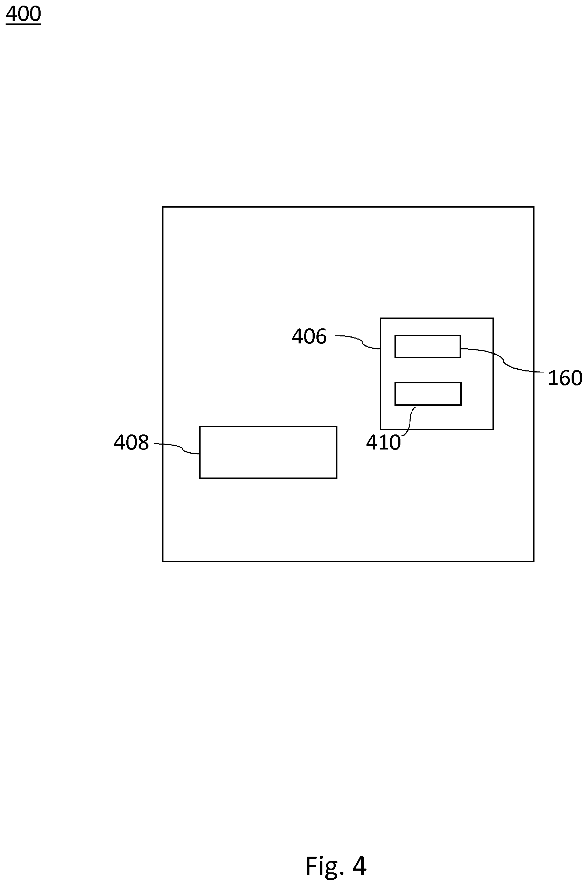

Figure 4 shows a schematic drawing of a computing device 400 according to embodiments of the present invention. Computing device 400 may comprise memory 406 storing classifier 160 and map imagery set 410. Computing device 400 may be associated with, connected to, or comprised in the mobile network 110. For example, computing device 400 be comprised in a serving node in the core network 1104.Computing device 400 further comprises CPU 408 configured for loading the classifier 160 from storage, and for receiving a first set of features relating to radio access metrics of the user equipment 100, such as the first set 1106 of features as explained with reference to Figure 1. CPU 408 may further be configured for obtaining a second set of features relating to core network metrics of the user equipment, such as the second set 1108 of features as explained with reference to Figure 1. CPU 408 may further be configured for determining, from map imagery set 410, a map tile for a current geolocation of the user equipment 100, and for inputting the first set of features, the second set of features, and the map tile to the classifier to determine whether the user equipment is located indoor or outdoor.

CPU 408 may then be configured to deliver the determination of whether the user equipment is indoor or outdoor via the mobile network 110 to other nodes in the mobile network 110, and to applications and services provided on the user equipment 100. According to the embodiments of the invention described above, determination of whether a user equipment is indoor or outdoor is improved by employing a trained classifier on features derived from metrics of the radio access network and the core network and on a determined map tile.

## Claims

1. A method (200) for obtaining a classifier (160) for determining whether a user equipment (100) is indoor or outdoor, the method comprising:
obtaining (202) a training set, wherein each element of the training set comprises a map tile, a first set of features from radio access network metrics associated with a location within the map tile, a second set of features from core network metrics associated with the location, and a truth value whether the location is indoor or outdoor, wherein the map tile is identified for the location from a map imagery set; and
training (204) a classifier (160) using the training set, wherein the classifier (160) comprises multiple neural networks, wherein the classifier (160) further comprises one or more convolutional neural networks and combination logic between the multiple neural networks and the one or more convolutional neural networks,
wherein the first set of features (1106) is fed to a first neural network (1602) of the multiple neural networks to determine a first probability, the second set of features (1108) is fed to a second neural network (1604) of the multiple neural networks to determine a second probability, and the map tile is fed to one (1606) of the one or more convolutional neural networks to produce a classification of the map tile, and wherein the first probability, the second probability, and the classification of the map tile are fed to a further neural network (1608) to produce a classification (180) of whether the location is indoor or outdoor.

2. A method for determining whether a user equipment (100) connected to a mobile network (110) is located indoor or outdoor, wherein the mobile network (110) comprises a core network (1104) and a radio access network (1102), the core network (1104) providing access to a data network (120), the method comprising:
determining (302) a first set of features (1106) from current metrics of the radio access network (1102);
determining (304) a second set of features (1108) from current metrics of the core network (1104);
determining (306) a map tile (1402) for a location of the user equipment (100), wherein the map tile (1402) is identified for the location from a map imagery set; and
employing the first set of features (1106) and the second set of features (1108) and the map tile (1402) as inputs to a classifier (160) to determine (308) whether the user equipment (100) is indoor or outdoor, wherein the map tile is fed to one of the one or more convolutional neural networks to produce a classification of the map tile,
wherein the first probability, the second probability, and the classification of the map tile are fed to a further neural network to produce a classification of whether the location is indoor or outdoor, wherein the classifier (160) has been obtained according to the method of claim 1.

3. The method of claim 2, wherein determining (306) the map tile (1402) for the current location of the user equipment (100) comprises:
communicating with the radio access network (1102) to obtain measurements (1110);
determining the location of the user equipment (100) by executing a geolocation algorithm (140); and
identifying, from a map imagery set, the map tile (1402) associated with the location.

4. The method of claim 2 or 3, wherein the first probability, the second probability, and the classification of the map tile are fed into a further neural network (1608) to produce a classification (180) of whether the user equipment (100) is indoor or outdoor.

5. The method of one of claims 1 to 4, wherein the combination logic is configured to perform feature processing between the multiple neural networks (1602, 1604, 1608) and the one or more convolutional neural networks (1606).

6. The method of one of claims 1 to 5, wherein the combination logic comprises data augmentation logic performed over the map tile.

7. The method of one of the preceding claims, wherein the first set of features (1106) comprises at least one of a feature indicating call drops and their causes, a feature indicating a cell quality index, a feature indicating a call setup success rate, a feature indicating failed handovers and their causes, a feature indicating timing advance and propagation delay, a feature indicating reference signal received quality, a feature indicating reference signal received power, a feature indicating channel state information reference signal received quality, a feature indicating channel state information reference signal received power, a feature indicating secondary signal reference signal received quality, a feature indicating secondary signal reference signal received power, and a feature indicating best reference signal code power.

8. The method of one of the preceding claims, wherein the second set of features (1108) comprises at least one of a feature indicating a client side TCP round trip time, a feature indicating server side TCP round trip time, a feature indicating a TCP retransmission rate, and a feature indicating a TCP window size.

9. A computing device (400) comprising:
memory (406) storing a trained classifier and a map imagery set, wherein the classifier (160) comprises multiple neural networks, wherein the classifier further comprises one or more convolutional neural networks and combination logic between the multiple neural networks and the one or more convolutional neural networks, wherein the classifier (160) has been obtained according to the method of claim 1; and
a processor (408) configured to receive a first set of features (1106) relating to current metrics of a radio access network (1102) for a user equipment (100), and a second set of features (1108) relating to current metrics of the core network (1104) for the user equipment (100), wherein the processor (302) is further configured to determine a map tile for a location of the user equipment (100) from the map imagery set, input the first set of features (1106), the second set of features (1108), and the map tile (1402) to the trained classifier (160) to determine whether the user equipment (100) is indoor or outdoor,
wherein inputting the first set of features (1106), the second set of features (1108), and the map tile (1402) to the trained classifier (160) comprises inputting the first set of features (1106) to a first neural network of the multiple neural networks to determine a first probability, inputting the second set of features to a second neural network of the multiple neural networks to determine a second probability, feeding the map tile to one (1606) of the one or more convolutional neural networks to produce a classification of the map tile, and feeding the first probability, the second probability, and the classification of the map tile to a further neural network to produce a classification of whether the location is indoor or outdoor.

10. The computing device of claim 9, wherein the trained classifier (160) is further trained according to the method of one of claims 3 to 8.

## Patentansprüche

1. Verfahren (200) zum Erhalten eines Klassifizierers (160) zum Bestimmen, ob sich ein Benutzergerät (100) in einem Innenraum oder im Außenbereich befindet, wobei das Verfahren umfasst:
Erhalten (202) eines Trainingssatzes, wobei jedes Element des Trainingssatzes eine Kartenkachel, einen ersten Satz von Merkmalen aus Funkzugangsnetzmetriken, die mit einem Ort innerhalb der Kartenkachel assoziiert sind, einen zweiten Satz von Merkmalen aus Kernnetzmetriken, die mit dem Ort assoziiert sind, und einen Wahrheitswert, ob sich der Ort in einem Innenraum oder im Außenbereich befindet, umfasst, wobei die Kartenkachel für den Ort aus einem Kartenbildsatz identifiziert wird; und
Trainieren (204) eines Klassifizierers (160) unter Verwendung des Trainingssatzes, wobei der Klassifizierer (160) mehrere neuronale Netze umfasst und der Klassifizierer (160) ferner ein oder mehrere neuronale Faltungsnetze und eine Kombinationslogik zwischen den mehreren neuronalen Netzen und dem einen oder den mehreren neuronalen Faltungsnetzen umfasst,
wobei der erste Satz von Merkmalen (1106) einem ersten neuronalen Netz (1602) der mehreren neuronalen Netze zugeführt wird, um eine erste Wahrscheinlichkeit zu bestimmen, der zweite Satz von Merkmalen (1108) einem zweiten neuronalen Netz (1604) der mehreren neuronalen Netze zugeführt wird, um eine zweite Wahrscheinlichkeit zu bestimmen, und die Kartenkachel einem (1606) des einen oder der mehreren neuronalen Faltungsnetze zugeführt wird, um eine Klassifizierung der Kartenkachel zu erzeugen, wobei die erste Wahrscheinlichkeit, die zweite Wahrscheinlichkeit und die Klassifizierung der Kartenkachel einem weiteren neuronalen Netz (1608) zugeführt werden, um eine Klassifizierung (180) zu erzeugen, ob der Ort ein Innenraum oder ein Außenbereich ist.

2. Verfahren zum Bestimmen, ob sich ein mit einem mobilen Netz (110) verbundenes Benutzergerät (100) in einem Innenraum oder im Außenbereich befindet, wobei das mobile Netz (110) ein Kernnetz (1104) und ein Funkzugangsnetz (1102) umfasst und das Kernnetz (1104) Zugang zu einem Datennetz (120) bereitstellt, wobei das Verfahren umfasst:
Bestimmen (302) eines ersten Satzes von Merkmalen (1106) aus aktuellen Metriken des Funkzugangsnetzes (1102);
Bestimmen (304) eines zweiten Satzes von Merkmalen (1108) aus aktuellen Metriken des Kernnetzes (1104);
Bestimmen (306) einer Kartenkachel (1402) für einen Standort des Benutzergerätes (100), wobei die Kartenkachel (1402) für den Ort aus einem Satz von Kartenbildern identifiziert wird; und
Verwenden des ersten Satzes von Merkmalen (1106) und des zweiten Satzes von Merkmalen (1108) und der Kartenkachel (1402) als Eingaben für einen Klassifizierer (160) um zu bestimmen (308), ob sich das Benutzergerät (100) in einem Innenraum oder im Außenbereich befindet, wobei die Kartenkachel einem des ein oder mehreren Faltungsneuronalnetze zugeführt wird, um eine Klassifizierung der Kartenkachel zu erzeugen,
wobei die erste Wahrscheinlichkeit, die zweite Wahrscheinlichkeit und die Klassifizierung der Kartenkachel in ein weiteres neuronales Netz eingespeist werden, um eine Klassifizierung zu erzeugen, ob es sich bei dem Ort um einen Innenraum oder Außenbereich handelt, wobei der Klassifizierer (160) gemäß dem Verfahren nach Anspruch 1 erhalten wurde.

3. Verfahren nach Anspruch 2, bei dem das Bestimmen (306) der Kartenkachel (1402) für den aktuellen Standort des Benutzergerätes (100) umfasst:
Kommunizieren mit dem Funkzugangsnetz (1102), um Messungen (1110) zu erhalten;
Bestimmen des Standorts des Benutzergerätes (100) durch Ausführen eines Geolokalisierungsalgorithmus (140); und
Identifizieren der dem Ort zugeordneten Kartenkachel (1402) aus einem Satz von Kartenbildern.

4. Verfahren nach Anspruch 2 oder 3, bei dem die erste Wahrscheinlichkeit, die zweite Wahrscheinlichkeit und die Klassifizierung der Kartenkachel in ein weiteres neuronales Netz (1608) eingespeist werden, um eine Klassifizierung (180) zu erstellen, ob sich das Benutzergerät (100) in einem Innenraum oder im Außenbereich befindet.

5. Verfahren nach einem der Ansprüche 1 bis 4, bei dem die Kombinationslogik derart eingerichtet ist, dass sie eine Merkmalsverarbeitung zwischen den mehreren neuronalen Netzen (1602, 1604, 1608) und dem einen oder den mehreren neuronalen Faltungsnetzen (1606) durchführt.

6. Verfahren nach einem der Ansprüche 1 bis 5, bei dem die Kombinationslogik eine Datenerweiterungslogik umfasst, die über die Kartenkachel ausgeführt wird.

7. Verfahren nach einem der vorhergehenden Ansprüche, bei dem der erste Satz von Merkmalen (1106) wenigstens eines der folgenden Merkmale umfasst: ein Merkmal, das Rufabbrüche und deren Ursachen anzeigt, ein Merkmal, das einen Zellenqualitätsindex anzeigt, ein Merkmal, das eine Rufaufbau-Erfolgsrate anzeigt, ein Merkmal, das fehlgeschlagene Übergaben und deren Ursachen anzeigt, ein Merkmal, das Zeitvorlauf und Ausbreitungsverzögerung anzeigt, ein Merkmal, das die Empfangsqualität des Referenzsignals anzeigt, ein Merkmal, das die Empfangsleistung des Referenzsignals anzeigt, ein Merkmal, das die Empfangsqualität des Referenzsignals mit Kanalzustandsinformationen anzeigt, ein Merkmal, das die Empfangsleistung des Referenzsignals mit Kanalzustandsinformationen anzeigt, ein Merkmal, das die Empfangsqualität des Sekundärsignals mit Referenzsignal anzeigt, ein Merkmal, das die Empfangsleistung des Sekundärsignals mit Referenzsignal anzeigt, und ein Merkmal, das die beste Referenzsignal-Codeleistung anzeigt.

8. Verfahren nach einem der vorhergehenden Ansprüche, bei dem der zweite Satz von Merkmalen (1108) wenigstens eines der folgenden Merkmale umfasst: ein Merkmal, das eine clientseitige TCP-Paketumlaufzeit angibt, ein Merkmal, das eine serverseitige TCP-Umlaufzeit angibt, ein Merkmal, das eine TCP-Neusenderate angibt, und ein Merkmal, das eine TCP-Fenstergröße angibt.

9. Datenverarbeitungsvorrichtung (400), umfassend:
einen Speicher (406), der einen trainierten Klassifizierer und einen Kartenbildsatz speichert, wobei der Klassifizierer (160) mehrere neuronale Netze umfasst, der Klassifizierer ferner ein oder mehrere neuronale Faltungsnetze und eine Kombinationslogik zwischen den mehreren neuronalen Netzen und dem einen oder den mehreren neuronalen Faltungsnetzen umfasst und der Klassifizierer (160) gemäß dem Verfahren von Anspruch 1 erhalten wurde; und
einen Prozessor (408), der derart eingerichtet ist, dass er einen ersten Satz von Merkmalen (1106), die sich auf aktuelle Metriken eines Funkzugangsnetzes (1102) für ein Benutzergerät (100) beziehen, und einen zweiten Satz von Merkmalen (1108) empfängt, die sich auf aktuelle Metriken des Kernnetzes (1104) für das Benutzergerät (100) beziehen, wobei der Prozessor (302) ferner derart eingerichtet ist, dass er eine Kartenkachel für einen Standort des Benutzergerätes (100) aus dem Kartenbildsatz bestimmt und den ersten Satz von Merkmalen (1106), den zweiten Satz von Merkmalen (1108) sowie die Kartenkachel (1402) in den trainierten Klassifizierer (160) eingibt, um zu bestimmen, ob sich das Benutzergerät (100) in einem Innenraum oder im Außenbereich befindet,
wobei das Eingeben des ersten Satzes von Merkmalen (1106), des zweiten Satzes von Merkmalen (1108) und der Kartenkachel (1402) in den trainierten Klassifizierer (160) das Eingeben des ersten Satzes von Merkmalen (1106) in ein erstes neuronales Netz der mehreren neuronalen Netze zur Bestimmung einer ersten Wahrscheinlichkeit, das Eingeben des zweiten Satzes von Merkmalen in ein zweites neuronales Netz der mehreren neuronalen Netze zur Bestimmung einer zweiten Wahrscheinlichkeit, das Einspeisen der Kartenkachel in eines (1606) der einen oder mehreren neuronalen Faltungsnetze, um eine Klassifizierung der Kartenkachel zu erzeugen, und Einspeisen der ersten Wahrscheinlichkeit, der zweiten Wahrscheinlichkeit und der Klassifizierung der Kartenkachel in ein weiteres neuronales Netz umfasst, um eine Klassifizierung zu erzeugen, ob der Ort in einem Innenraum oder im Außenbereich ist.

10. Computervorrichtung nach Anspruch 9, bei der der trainierte Klassifizierer (160) gemäß dem Verfahren nach einem der Ansprüche 3 bis 8 weiter trainiert wird.

## Revendications

1. Procédé (200) pour obtenir un classifieur (160) afin de déterminer si un équipement utilisateur (100) se trouve à l'intérieur ou à l'extérieur, le procédé comprenant :
l'obtention (202) d'un ensemble d'apprentissage, dans lequel chaque élément de l'ensemble d'apprentissage comprend une tuile de carte, un premier ensemble de caractéristiques provenant de métriques de réseau d'accès radio associées à une position dans la tuile de carte, un deuxième ensemble de caractéristiques provenant de métriques de coeur de réseau associées à la position, et une valeur de vérité déterminant si la position se trouve à l'intérieur ou à l'extérieur, dans lequel la tuile de carte est identifiée pour la position à partir d'un ensemble d'images cartographiques ; et
l'apprentissage (204) d'un classifieur (160) à l'aide de l'ensemble d'apprentissage, dans lequel le classifieur (160) comprend de multiples réseaux neuronaux, dans lequel le classifieur (160) comprend en outre un ou plusieurs réseaux neuronaux convolutifs et une logique combinatoire entre les multiples réseaux neuronaux et lesdits un ou plusieurs réseaux neuronaux convolutifs,
dans lequel le premier ensemble de caractéristiques (1106) est fourni à un premier réseau neuronal (1602) des multiples réseaux neuronaux afin de déterminer une première probabilité, le deuxième ensemble de caractéristiques (1108) est fourni à un deuxième réseau neuronal (1604) des multiples réseaux neuronaux afin de déterminer une deuxième probabilité, et la tuile de carte est fournie à un réseau (1606) desdits un ou plusieurs réseaux neuronaux convolutifs pour produire une classification de la tuile de carte, et dans lequel la première probabilité, la deuxième probabilité et la classification de la tuile de carte sont fournies à un réseau neuronal additionnel (1608) pour produire une classification (180) indiquant si la position se trouve à l'intérieur ou à l'extérieur.

2. Procédé pour déterminer si un équipement utilisateur (100) connecté à un réseau mobile (110) se trouve à l'intérieur ou à l'extérieur, dans lequel le réseau mobile (110) comprend un coeur de réseau (1104) et un réseau d'accès radio (1102), le coeur de réseau (1104) fournissant l'accès à un réseau de données (120), le procédé comprenant :
la détermination (302) d'un premier ensemble de caractéristiques (1106) à partir des métriques actuelles du réseau d'accès radio (1102) ;
la détermination (304) d'un deuxième ensemble de caractéristiques (1108) à partir des métriques actuelles du coeur de réseau (1104) ;
la détermination (306) d'une tuile de carte (1402) pour une position de l'équipement utilisateur (100), dans lequel la tuile de carte (1402) est identifiée pour la position à partir d'un ensemble d'images cartographiques ; et
l'utilisation du premier ensemble de caractéristiques (1106) et du deuxième ensemble de caractéristiques (1108) et de la tuile de carte (1402) comme entrées dans un classifieur (160) afin de déterminer (308) si l'équipement utilisateur (100) se trouve à l'intérieur ou à l'extérieur,
dans lequel la tuile de carte est fournie à l'un desdits un ou plusieurs réseaux neuronaux convolutifs pour produire une classification de la tuile de carte,
dans lequel la première probabilité, la deuxième probabilité et la classification de la tuile de carte sont fournies à un réseau neuronal additionnel pour produire une classification indiquant si la position se trouve à l'intérieur ou à l'extérieur,
dans lequel le classifieur (160) a été obtenu selon le procédé de la revendication 1.

3. Procédé selon la revendication 2, dans lequel la détermination (306) de la tuile de carte (1402) pour la position actuelle de l'équipement utilisateur (100) comprend :
une communication avec le réseau d'accès radio (1102) pour obtenir des mesures (1110) ;
la détermination de la position de l'équipement utilisateur (100) en exécutant un algorithme de géolocalisation (140) ; et
l'identification, à partir d'un ensemble d'images cartographiques, de la tuile de carte (1402) associée à la position.

4. Procédé selon la revendication 2 ou 3, dans lequel la première probabilité, la deuxième probabilité et la classification de la tuile de carte sont fournies à un réseau neuronal additionnel (1608) pour produire une classification (180) indiquant si l'équipement utilisateur (100) se trouve à l'intérieur ou à l'extérieur.

5. Procédé selon l'une des revendications 1 à 4, dans lequel la logique combinatoire est configurée pour mettre en œuvre un traitement de caractéristiques entre les multiples réseaux neuronaux (1602, 1604, 1608) et lesdits un ou plusieurs réseaux neuronaux convolutifs (1606).

6. Procédé selon l'une des revendications 1 à 5, dans lequel la logique combinatoire comprend une logique d'augmentation de données mise en œuvre sur la tuile de carte.

7. Procédé selon l'une des revendications précédentes, dans lequel le premier ensemble de caractéristiques (1106) comprend au moins une caractéristique parmi une caractéristique indiquant les interruptions d'appel et leurs causes, une caractéristique indiquant un indice de qualité de cellule, une caractéristique indiquant un taux de réussite d'établissement d'appel, une caractéristique indiquant les transferts échoués et leurs causes, une caractéristique indiquant l'avance temporelle et le retard de propagation, une caractéristique indiquant la qualité reçue du signal de référence, une caractéristique indiquant la puissance reçue du signal de référence, une caractéristique indiquant la qualité reçue du signal de référence d'information d'état de canal, une caractéristique indiquant la puissance reçue du signal de référence d'information d'état de canal, une caractéristique indiquant la qualité reçue du signal de référence du signal secondaire, une caractéristique indiquant la puissance reçue du signal de référence du signal secondaire, et une caractéristique indiquant la meilleure puissance de code du signal de référence.

8. Procédé selon l'une des revendications précédentes, dans lequel le deuxième ensemble de caractéristiques (1108) comprend au moins une caractéristique parmi une caractéristique indiquant un temps d'aller-retour TCP côté client, une caractéristique indiquant un temps d'aller-retour TCP côté serveur, une caractéristique indiquant un taux de retransmission TCP, et une caractéristique indiquant une taille de fenêtre TCP.

9. Dispositif informatique (400) comprenant :
une mémoire (406) stockant un classifieur entraîné et un ensemble d'images cartographiques, dans lequel le classifieur (160) comprend de multiples réseaux neuronaux, dans lequel le classifieur comprend en outre un ou plusieurs réseaux neuronaux convolutifs et une logique combinatoire entre les multiples réseaux neuronaux et lesdits un ou plusieurs réseaux neuronaux convolutifs, dans lequel le classifieur (160) a été obtenu selon le procédé de la revendication 1 ; et
un processeur (408) configuré pour recevoir un premier ensemble de caractéristiques (1106) relatives à des métriques actuelles d'un réseau d'accès radio (1102) pour un équipement utilisateur (100), et un deuxième ensemble de caractéristiques (1108) relatives à des métriques actuelles du coeur de réseau (1104) pour l'équipement utilisateur (100), dans lequel le processeur (302) est en outre configuré pour déterminer une tuile de carte pour une position de l'équipement utilisateur (100) à partir de l'ensemble d'images cartographiques, et pour entrer le premier ensemble de caractéristiques (1106), le deuxième ensemble de caractéristiques (1108) et la tuile de carte (1402) dans le classifieur entraîné (160) afin de déterminer si l'équipement utilisateur (100) se trouve à l'intérieur ou à l'extérieur,
dans lequel l'entrée du premier ensemble de caractéristiques (1106), du deuxième ensemble de caractéristiques (1108) et de la tuile de carte (1402) dans le classifieur entraîné (160) comprend l'entrée du premier ensemble de caractéristiques (1106) dans un premier réseau neuronal parmi les multiples réseaux neuronaux afin de déterminer une première probabilité, l'entrée du deuxième ensemble de caractéristiques dans un deuxième réseau neuronal parmi les multiples réseaux neuronaux afin de déterminer une deuxième probabilité, la fourniture de la tuile de carte à un réseau (1606) desdits un ou plusieurs réseaux neuronaux convolutifs pour produire une classification de la tuile de carte, et la fourniture de la première probabilité, de la deuxième probabilité et de la classification de la tuile de carte à un réseau neuronal additionnel pour produire une classification indiquant si la position se trouve à l'intérieur ou à l'extérieur.

10. Dispositif informatique selon la revendication 9, dans lequel le classifieur entraîné (160) est en outre entraîné selon le procédé de l'une des revendications 3 à 8.
